# EUROPEAN PATENT SPECIFICATION

(11) **EP 1 831 262 B1**
(45) Date of publication and mention of the grant of the patent: **08.10.2014**
(21) Application number: 05847512.0
(22) Date of filing: 20.12.2005
(51) Int. Cl.: C08F 6/20, C08F 6/00, F26B 3/084

(54) **METHOD FOR DRYING A WET POLYMER**
TROCKNUNGSVERFAHREN FÜR EIN NASSES POLYMER
PROCÉDÉ DE SÉCHAGE D'UN POLYMÈRE HUMIDE

(30) Priority: 22.12.2004 FR 0413706
(43) Date of publication of application: 12.09.2007
(73) Proprietor: SOLVAY SA, 1120 Bruxelles (BE)
(72) Inventor: BINDELLE, Jean-Paul, B-1435 Mont-saint-guibert (BE); DE FRANCISCO, Manuel, B-1050 Brussels (BE); BODIN, Stephanie, B-1420 Braine L'alleud (BE)
(74) Representative: Vande Gucht, Anne
(86) International application number: PCT/EP2005/056935
(87) International publication number: WO 2006/067126

(56) References cited:
- EP-A- 0 992 520
- WO-A-93/13843
- WO-A-98/52978
- US-A- 3 313 035
- US-A- 4 466 202
- US-A- 4 492 040
- US-B1- 6 242 562

## Description

The present invention relates to a method and an apparatus for drying a wet polymer comprising a fluidized bed dryer.

It is known how to synthesize certain polymers, particularly certain styrene, acrylic and vinyl halide polymers in aqueous medium. After their separation from their aqueous polymerization medium, these polymers may be in the form of "wet cakes" which must be dried.

Thus, in the case of the aqueous suspension polymerization of vinyl chloride, for example, a suspension of polyvinyl chloride grains measuring about 100 microns in water is obtained. After degassing, this suspension is sent to large tanks equipped with a stirring system, and then transferred to spin dryers to remove virtually all the mother liquors. The "cake" collected after spin drying must be dried, for example, in a rotary dryer or in a fluidized bed dryer.

Fluidized bed dryers, suitable for drying such "cake" have already been described in documents US-A-3 771 237 (D1) and US-A-4 492 040 (D2). These documents describe fluidized bed dryers containing internal heating elements that can be heated by steam. The document Chemical Engineering Process, volume 75, November 1979, pages 58 to 64 (D3), describes the drying, by a drying gas, of polymers such as polyvinyl chloride, issuing from aqueous suspensions, using fluidized bed dryers containing internal heating elements with a steam inlet and outlet. Finally, document US-B-6 242 562 describes the drying of polymer "cake" obtained by aqueous suspension polymerization, in a fluidized bed dryer operating at a temperature of 75 °C with a flow of steam at a gauge pressure of 3.5 kg/cm² (3.4 bar) and at a temperature of 147 °C.

It is also known (see document DD-A-156 479) that, during the drying, by superheated steam, of PVC obtained in aqueous suspension, the PVC mother liquors can be recycled to the polymerization step.

Most polymers obtained in aqueous medium, and particularly vinyl halide polymers, such as polyvinyl chloride, for example, deteriorate rapidly when subjected to the excessively high temperatures that may prevail in the fluidized bed dryers of which the heating elements are heated by pressurized steam, if the operating conditions of these dryers are not optimal (defective regulation, electric power supply failure, etc.).

Moreover, in industrial practice, it has been found that the efficiency of dryers, particularly of fluidized bed dryers, using steam as a heat-transfer fluid, is lower than their nominal capacity, in their polymer "cake" drying function. This loss of efficiency is due, in particular, to a decrease in the heat transfer coefficient between the steam and the fluidized bed of the dryer. This decrease in the heat transfer coefficient can be attributed to the presence of other gases in the steam used as heat-transfer fluid, gases that are incondensable in the operating conditions of the drying installation. These incondensable gases are essentially oxygen, nitrogen and carbon dioxide, components of the air present in the said steam. These gases, trapped in the heating elements of the dryer, form insulating pockets along the walls of the said elements and oppose the heat transfer between the steam and the fluidized bed, lowering the total heat transfer coefficient of the dryer.

This decrease in the heat transfer coefficient can be remedied by increasing the temperature of the heating elements of the dryer, in order to maintain the same heat flux between the heating elements and the fluidized bed. However, all fluidized bed dryers use electric power as a motive force. Accordingly, any electric power supply failure that causes the interruption of the fluidizing air injection into the dryer, causes the polymer to stagnate and deteriorate in the heating elements that are at high temperature.

It is a goal of the present invention to provide a drying method and an apparatus not having these drawbacks.

The present invention accordingly relates, principally, to a method for drying a wet polymer, comprising a drying step carried out in a dryer containing at least one heating element in which a heat-transfer fluid flows, the said heat-transfer fluid being low-pressure steam.

In the present description, the term "wet polymer" means a polymer in the state of solid particles of which the water content is generally equal to or lower than 50 % by weight of polymer, and preferably equal to or lower than 35 % by weight of polymer.

The wet polymers that can be dried using the method according to the invention may be any polymers of which the synthesis includes at least one step carried out in aqueous medium.

The polymers are vinyl chloride polymers. For the purposes of the present invention, vinyl chloride polymer means all polymers containing at least about 50 % by weight, preferably at least 60 %, particularly preferably at least 70 % by weight of monomer units and, in particularly preferred manner, at least 85 % by weight of monomer units derived from vinyl chloride, thus vinyl chloride homopolymers just as much as vinyl chloride copolymers with one or more ethylenically unsaturated monomers. Examples of ethylenically unsaturated monomers copolymerizable with vinyl chloride include fluorinated monomers such as vinylidene fluoride, vinyl esters such as vinyl acetate, acrylic monomers such as n-butyl acrylate, styrene monomers such as styrene, and olefinic monomers such as ethylene, propylene and butadiene.

The method according to the invention produces excellent results when applied to the drying of a wet polymer resulting from the aqueous suspension homopolymerization of vinyl chloride, of which the water content is usually between 15 % and 30 % by weight of polymer. For the purposes of the present invention, aqueous suspension polymerization means a radical polymerization method carried out in aqueous medium in the presence of dispersants and oleosoluble radical initiators.

The drying step of the drying method according to the invention is carried out in a fluidized bed dryer. This fluidized bed dryer is advantageously equipped with at least one internal heating element, preferably a plurality of internal heating elements. Examples of usable fluidized bed dryers are described in documents D1 to D3 mentioned above. It is preferable to use continuous fluidized bed dryers such as those called "back-mixed" dryers in documents D2 and D3. Fluidized bed dryers, in the chamber of which the heating elements, usually in the form of plates or tubes, are aligned in bundles, side by side and vertically above the fluidization grid of the fluidizing agent, are particularly well-suited to this purpose.

To remove the water from the wet polymer to be dried, the latter is generally introduced into the chamber of the fluidized bed dryer via any device fit for dispersing it therein.

The fluidizing agent, generally heated to a temperature of between 30 and 120 °C, is usually atmospheric air, filtered and conveyed by low pressure blowers. Filtration is aimed at preventing the contamination, by outside particles, of the polymer to be dried.

The volume of fluidizing agent introduced into the fluidized bed dryer is generally the volume necessary to prevent the dry solid polymer from settling in certain parts of the dryer chamber, and to prevent the condensation of moisture in the dryer headspace. If the polymer is PVC, for example, accidental settling can harm the quality of the end product, due to the thermal sensitivity of PVC to high temperatures.

The chamber of the fluidized bed dryer generally has a structure suitable for occupying the smallest amount of space and creating a minimum of stagnant points, to avoid the problem described above and to make it easier to clean the chamber in the event of the production of another grade of PVC, in the event of accidental contamination, or in the event of maintenance operations.

The energy contained in the fluidizing agent is generally insufficient to evaporate all the water present in the polymer "cake". This is why heating elements are advantageously installed inside the chamber of the fluidized bed dryer. It is advantageous to control the temperature of these elements to prevent degradation of the polymer. Any failure in the fluidizing agent injection system may cause the polymer to settle on the heating elements, which may consequently reach excessively high temperatures, and it is therefore important for the temperature of the heating elements to be able to be rapidly reduced.

The control and uniformity of the temperature of the internal heating elements of the fluidized bed dryer are advantageously much facilitated by the method according to the present invention. In fact, according to this method, the heat-transfer fluid - that is, the fluid that carries and spreads the heat - flowing in the heating elements is low-pressure steam. In the present description, the expression "low-pressure steam" means steam at an absolute pressure (that is, the gauge pressure measured on the pressure gauge plus the atmospheric pressure) that is equal to or less than 4 bar, preferably equal to or less 3 bar, more particularly equal to or less than 1 bar. Good results have been recorded with steam at a pressure below standard atmospheric pressure (1 bar), that is, at an absolute pressure of a fraction of a bar. This pressure is preferably equal to or lower than 0.95 bar, more particularly equal to or lower than 0.90 bar. This pressure is preferably equal to or higher than 0.05 bar, more particularly equal to or higher than 0.10 bar. Particularly preferred pressure values are between 0.60 and 0.90 bar, typically about 0.80 bar. The pressure of the steam is measured at the inlet of the heating elements. This steam is conveyed into the dryer chamber via the heating elements, which may be tubes of small diameter, for example, between 10 and 50 mm in diameter or, preferably, thin plates, for example, between 5 and 50 mm thick.

The low-pressure steam may be superheated steam or saturated steam; it is preferably saturated steam.

Saturated steam means steam at the temperature of the boiling point that corresponds to its pressure.

Superheated steam means steam heated to a temperature higher than the boiling point corresponding to its pressure.

This steam, preferably saturated, can advantageously be generated by desuperheating and, if necessary, expansion of steam issuing from a unit producing vinyl chloride from which the polymer is synthesized. The steam pressure is advantageously controlled so as to keep the temperature in the heating elements constant. To guarantee a constant temperature in the heating elements, the steam is preferably expanded (if applicable) and desuperheated upstream of the heating elements. The steam entering heating elements being preferably saturated, controlling the pressure downstream of the dryer serves to control the temperature in the heating elements. This pressure control can, for example, be implemented by adjusting the percentage opening of an appropriate steam expansion device, such as a valve.

One important advantage of the use of low-pressure steam as heat-transfer fluid in the heating elements of the dryer resides in the fact that it does not cause a decrease of the heat transfer coefficient with the fluid of the method, in particular the fluidized bed of the dryer. This appears to be due to the fact that - all subsequent condensation conditions being equal - this steam passes through the heating elements of the dryer at a higher speed than higher pressure steam, thereby decreasing the concentration of incondensable gases trapped in the heating elements of the dryer and forming insulating pockets therein (see above).

A further advantage of the use of low-pressure steam as heat-transfer fluid, in the heating elements, to dry polymers that rapidly degrade under the effect of excessively high temperatures, lies in the fact that the temperature of the steam remains below the polymer degradation temperature, thereby limiting the risks of degradation. On the contrary, the known drying installations use pressurized steam at temperatures of at least 150°C, with all the risks of thermal degradation of the polymer that this may incur in case of (electrical, etc.) failure of the installation.

Finally, thanks to the use of low-pressure steam as heat-transfer fluid, the method according to the invention is suitable for recovering energy-yielding byproducts, at very degraded levels, coming from other production facilities. This is the case, for example, of the steam produced in the production of vinyl chloride, available at an absolute pressure of about 4 to about 10 bar at the outlet of this production facility.

At the outlet of the dryer, the fluidizing agent is generally highly laden with solid polymer particles. The solid particles are generally separated via conventional static devices, such as bag filters, or devices such as cyclones. In all cases, the temperature is advantageously carefully controlled to prevent the destruction of the filters or the degradation of the polymer in the cyclones.

During the steady state operation of the dryer in which the drying step of the method of the invention takes place, the low-pressure steam is advantageously condensed at least partly in the heating elements of the said dryer. Subsequent condensation of the vapour phase can be obtained by any condensation means known for this purpose, such as, for example, by the use of mixture condensers, surface condensers, steam ejectors, liquid seal vacuum pumps, etc. This condensation leads to the formation of a condensable portion, called "condensates" below, and of an incondensable portion (essentially the oxygen, the nitrogen and the carbon dioxide, from the air present in the said phase) called "gases" below. The condensates and gases thus obtained may remain in the state of a homogenous mixture, the gases remaining substantially dissolved in the condensates. The gases are separated from the condensates by any separation means known for this purpose, for example, by separation in the condensers mentioned above. The condensates can then advantageously be reinjected, at least partially, into the low-pressure steam supplied to the heating elements of the dryer. It is thereby possible to achieve savings on deionized water, which is generally mixed with this steam in order to regulate the temperature of the heating elements.

The method according to the invention can be implemented continuously or in batch mode. Continuous mode is preferable.

The method for drying a wet polymer according to the invention can be implemented using any appropriate device.

Thus, the drying method according to the invention can be implemented using a liquid ring vacuum pump.

In the present description, "liquid ring vacuum pump" means the devices, well known to a person skilled in the art, for creating a vacuum by the eccentric motion of at least one of their parts which is a moving part. The operation of these devices is based on the principle of using a service liquid driven in the above eccentric motion. Other details relative to these devices and to the characteristics of their operation can be found, for example, in the catalogue of apparatus supplied by Sterling Fluid Systems Group (SIHI).

The method for drying a wet polymer according to the invention is nevertheless preferably implemented using the apparatus according to the invention described below.

According to another aspect, the invention therefore also relates to an apparatus comprising a fluidized bed dryer. This apparatus is usable in particular for implementing the method for drying a wet polymer according to the invention.

This apparatus is disclosed in claim 5.

All the definitions, comments and limitations described above in relation to the dryer usable in the drying method according to the invention and its operation apply, mutatis mutandis, to the dryer (SE).

All the definitions, comments and limitations described above in relation to the low-pressure steam usable in the drying method according to the invention apply *mutatis mutandis* to the steam (V).

In the present description, the term "ejector" means the devices, well known to a person skilled in the art, called "steam ejectors". The operation of these devices, which comprise no moving parts, is based on the principle of using a high pressure motive fluid to drive a fluid sucked in at low pressure. The two mixed fluids are discharged at an intermediate pressure. Other details relative to these devices and to the characteristics of their operation can be found, for example, in the catalogue "Jet pumps and gas scrubbers" published in August 1992 by the company GEA WIEGAND Gmbh at W-7505 Ettlingen.

In the present description, the term "condensates" (C) means the substantially deionized water resulting from the condensation of the steam (V) in the heating elements of the dryer (SE).

According to a first preferred embodiment of the apparatus according to the invention, the latter further comprises a separator (SP) for separating the gases (G) from the condensates (C) of the steam (V) leaving the dryer (SE). In the present description, the term "gases" (G) means the gases that are incondensable in the normal operating conditions of the apparatus according to the invention. These are essentially the oxygen, the nitrogen and the carbon dioxide, from the air present in the low-pressure steam, and possibly part of the steam itself that is not condensed in the operating conditions of the apparatus.

In the separator (SP) of this preferred embodiment of the apparatus according to the invention, the gases (G) and condensates (C) are separated In its most elementary embodiment, this separator can be a simple substantially vertical pipe.

In a first variant of this embodiment of the apparatus according to the invention, the separator (SP) is preferably a mixture condenser. Mixture condensers, well known to a person skilled in the art, are described, for example, in the catalogue "Jet pumps and gas scrubbers" mentioned above. The mixture condenser is usually supplied with deionized water as the heat exchange fluid. This deionized water may, for example, be the water of the condensates (C), optionally recycled as described below. Thanks to its low temperature with respect to the steam (V) used in the dryer, the deionized water injection advantageously permits more flexible operation in the event of substantial ingress of gas into the vacuum steam network. The use of deionized water is also advantageous for obtaining low injection rates that do not entail an increase in the size of ejector (E1) or of the condensate recirculating pump (described below).

In the mixture condenser - which sucks in at least part of the steam used in the heating elements and which creates a cold point downstream of the said elements - advantageously, the steam condenses and the vapour and liquid phases are cooled.

In a second variant of this embodiment of the apparatus according to the invention, the separator (SP) is preferably a surface condenser, also called "dephlegmator". Surface condensers, well known to a person skilled in the art, are described, for example, in the catalogue "Jet pumps and gas scrubbers" mentioned above. The heat exchange area of the condenser is advantageously sufficient to condense the portion of steam not condensed in the heating elements, with simultaneous heating of the fluidizing agent of the dryer, by heat exchange.

The first variant of the embodiment involving the use of a mixture condenser as separator (SP), is preferred.

According to a second preferred embodiment of the apparatus according to the invention, it comprises, in addition to the ejector (E1) and the separator (SP) described above, an ejector (E2). The condensates (C) and gases (G), separated in the separator (SP), are then advantageously sucked in respectively by the ejector (E1) and by the ejector (E2). The fluid sucked in by the ejector (E1) advantageously consists of the condensates (C) issuing from the separator (SP), which are at the steam temperature and saturation pressure; the fluid sucked in by the ejector (E2) advantageously consists of the gases (G) issuing from the separator (SP). The motive fluid of the ejector (E1) and/or the motive fluid of the ejector (E2) may consist of pressurized steam. This steam may, for example, be part of the steam issuing from the unit producing the monomer from which the polymer to be dried discussed above is synthesized, before its desuperheating and expansion.

The advantage of the presence of the ejector (E2) in the apparatus according to the invention resides, on the one hand, in the fact that it permits rapid depressurization down to the desired low pressure, when the heat-transfer fluid circuit is full of air at start-up and, on the other, in the fact that it accelerates the flow of the heat-transfer fluid through the heating elements of the dryer.

It has been found that conferring a higher capacity on the ejector (E2) advantageously favours the mechanical entrainment of the gases (G) and decreases their concentration in the heating elements of the dryer.

Irrespective of the embodiment used, the mixed fluids issuing from the ejector (E1) and, if any, the ejector (E2), are advantageously sent via the said ejector(s), to a collecting tank (R), also called "condensate tank" in this technical field. The gases (G) advantageously escape from this tank to the atmosphere. This tank (R) is a highly advantageous element of this embodiment insofar as, properly dimensioned, in the event of operating problems (electric power failure, etc.), it permits the rapid drainage of the apparatus and the cooling of the dryer (SE), without the risk of degradation by overheating of the polymer to be dried.

According to an advantageous optional variant of the second embodiment, the fluid withdrawn at the base of the tank (R), resulting from the mixing of the condensates and the motive fluids, is recycled in shuttle mode, via a propulsion device such as a pump, for example, to the ejectors (E1) and (E2) in which they serve in their turn as motive fluid. A preponderant proportion (generally more than half by volume, preferably more than 70 % by volume) of this withdrawn fluid comprising the condensates (C) recycled in shuttle mode downstream of the tank (R) hence advantageously serves as motive fluid for the ejector (E2). The heat released by the gases to the fluid withdrawn at the base of the tank (R) can be used, via a heat exchanger, for example, to preheat the fluidizing air of the dryer (SE). Finally, part of the fluid withdrawn at the base of the tank (R) can be reinjected into the low-pressure steam supplied to the heating elements of the dryer (SE). This reinjection can be advantageously controlled by an adequate conventional device controlling the temperature of the said steam. The apparatus according to the invention hence preferably further comprises means for reinjecting at least part of the condensates (C) into the steam supplied to the dryer (S). The reinjected flow rate can, for example, be advantageously adjusted to obtain a steam temperature slightly higher (2 to 3 °C higher) than the steam saturation temperature corresponding to the pressure prevailing in the heating elements of the dryer (SE), so that the steam is saturated when it is in the heating elements.

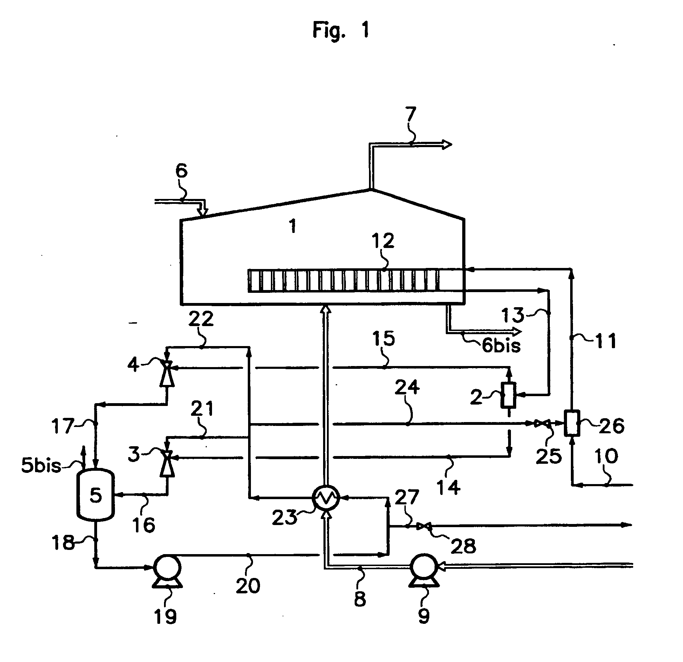

One particular embodiment of the apparatus according to the invention will now be illustrated with reference to the drawing accompanying the present description. This drawing consists of the appended Figure 1, schematically showing a typical form of execution of the apparatus according to the invention, used to dry a PVC "cake" continuously.

The PVC "cake" to be dried, in which the water content is between 15 and 30 % by weight, is introduced into the chamber of the fluidized bed dryer 1 via the line 6 and a "cake" dispersion device, not shown. Fluidizing air, propelled by the pump (blower) 9, is introduced into the chamber of the dryer 1 via the line 8.

The heating elements 12 of the dryer 1 are supplied with steam from the vinyl chloride monomer production unit, the said steam successively passing through the line 10 where it is at an absolute pressure of between about 4 and about 10 bar, through the expansion device 26 where it is brought to the temperature and absolute pressure required so that, when conveyed to the heating elements via the line 11, the steam there is in the state of saturated steam.

The PVC powder dried after it passes through the heating elements 12 is removed via the line 6 bis. The condensates and gases, resulting from the cooling of the steam in the heating elements 12, are sucked out of these elements by means of the vacuum created by the ejector 3, and conveyed to the separator 2 via the line 13. The condensates are sucked along the line 14 by the ejector 3. The gases are sucked along the line 15 by the ejector 4. These fluids, mixed with the motive fluids (see below) from the ejectors 3 and 4, are collected, via the lines 16 and 17, in the tank 5.

The portion of uncondensed fluid in the tank 5, which comprises most of the gases, escapes to the atmosphere via the orifice 5 bis. The portion of condensed fluid in this tank, resulting from the mixing of the condensates and motive fluids, conveyed to the pump 19 via the pipe 18, is recycled in shuttle mode by this pump, via the nozzles 20, 21 and 22, to serve as motive fluid in the ejectors 3 and 4 respectively, supplying along the way a heat exchanger 23 that preheats the fluidizing air flowing in the line 8. Another part of this condensed fluid is tapped off via the line 24 and the injection valve 25 to the device 26 to regulate the temperature of the steam supplied to the heating elements 12. A final part of the condensed fluid leaves the apparatus via the line 27 and the valve 28.

In the variant of the embodiment of the apparatus whereby the separator 2 is a mixture condenser (not graphically shown), this final part of the condensed fluid is mixed with the fluid leaving the heating elements 12 in order to cool it.

## Claims

1. Method for drying a polymer derived from vinyl chloride, of which the synthesis includes at least one step carried out in aqueous medium and being in the state of solid particles of which the water content is equal to or lower than 50% by weight of polymer, comprising a drying step carried out in a fluidized bed dryer containing at least one heating element in which a heat-transfer fluid flows, the said heat-transfer fluid being steam at an absolute pressure that is equal to or less than 4 bar.

2. Method according to Claim 1, **characterized in that** the heat-transfer fluid is steam at an absolute pressure lower than 1 bar.

3. Method according to either of Claims 1 or 2, **characterized in that** the steam is saturated steam.

4. Method according to any one of Claims 1 to 3, **characterized in that** the heat-transfer fluid is steam generated by desuperheating and, if applicable, expansion of the steam issuing from a unit producing vinyl chloride from which the polymer is synthesized.

5. Apparatus comprising at least:
- one fluidized bed dryer (SE) equipped with at least one heating element supplied with steam (V) at an absolute pressure that is equal to or less than 4 bar;
- a separator (SP) for separating the gases (G) from the condensates (C) of the steam (V) leaving the dryer (SE);
- one ejector (E1) for sucking out the condensates (C) produced by the condensation of the steam (V) downstream of the dryer (SE);
- one tank (R) for collecting the condensates (C) issuing from the ejector (E1).

6. Apparatus according to Claim 5, further comprising a second ejector (E2) for sucking out the gases (G) issuing from the separator (SP).

7. Apparatus according to Claim 5, **characterized in that** the separator (SP) is a mixture condenser.

8. Apparatus according to Claim 5, **characterized in that** the separator (SP) is a dephlegmator.

9. Apparatus according to Claim 6, **characterized in that** the motive fluid of the ejector (E2) consists of a preponderant proportion of fluid comprising the condensates (C) recycled in shuttle mode downstream of the tank (R).

10. Apparatus according to Claim 5, **characterized in that** it further comprises means for reinjecting at least part of the condensates (C) into the steam supplied to the dryer (SE).

11. Apparatus according to Claim 5, used for drying a wet polymer derived from vinyl chloride.

## Patentansprüche

1. Verfahren zum Trocknen eines von Vinylchlorid abgeleiteten Polymers, dessen Synthese mindestens einen in einem wässrigen Medium durchgeführten Schritt einschließt und das im Zustand von festen Teilchen, deren Wassergehalt kleiner gleich 50 Gew.-% Polymer ist, vorliegt, umfassend einen Trocknungsschritt, der in einem Wirbelschichttrockner mit mindestens einem Heizelement, in dem ein Wärmeübertragungsfluid fließt, durchgeführt wird, wobei es sich bei dem Wärmeübertragungsfluid um Wasserdampf bei einem Absolutdruck kleiner gleich 4 bar handelt.

2. Verfahren nach Anspruch 1, **dadurch gekennzeichnet, dass** es sich bei dem Wärmeübertragungsfluid um Wasserdampf bei einem Absolutdruck von weniger als 1 bar handelt.

3. Verfahren nach Anspruch 1 oder 2, **dadurch gekennzeichnet, dass** es sich bei dem Wasserdampf um gesättigten Wasserdampf handelt.

4. Verfahren nach einem der Ansprüche 1 bis 3, **dadurch gekennzeichnet, dass** es sich bei dem Wärmeübertragungsfluid um durch Enthitzung und gegebenenfalls Entspannung des aus Vinylchlorid, aus dem das Polymer synthetisiert wird, produzierenden Einheit stammenden Wasserdampfs erzeugten Wasserdampf handelt.

5. Apparatur, umfassend mindestens:
- einen Wirbelschichttrockner (SE) mit mindestens einem Heizelement, das mit Wasserdampf (V) bei einem Absolutdruck kleiner gleich 4 bar versorgt wird;
- einem Separator (SP) zur Trennung der Gase (G) von den Kondensaten (C) des aus dem Trockner (SE) austretenden Wasserdampfs (V);
- einen Ejektor (E1) zum Absaugen der durch die Kondensation des Wasserdampfs (V) produzierten Kondensate (C) stromabwärts des Trockners (SE);
- einen Tank (R) zum Sammeln der aus dem Ejektor (E1) stammenden Kondensate (C).

6. Apparatur nach Anspruch 5, ferner umfassend einen zweiten Ejektor (E2) zum Absaugen der aus dem Separator (SP) stammenden Gase (G).

7. Apparatur nach Anspruch 5, **dadurch gekennzeichnet, dass** es sich bei dem Separator (SP) um einen Mischkondensator handelt.

8. Apparatur nach Anspruch 5, **dadurch gekennzeichnet, dass** es sich bei dem Separator (SP) um einen Dephlegmator handelt.

9. Apparatur nach Anspruch 6, **dadurch gekennzeichnet, dass** das Treibfluid des Ejektors (E2) aus einem überwiegenden Anteil von Fluid, das die stromabwärts des Tanks (R) im Shuttle-Modus rezyklierten Kondensate (C) umfasst, besteht.

10. Apparatur nach Anspruch 5, **dadurch gekennzeichnet, dass** sie ferner Mittel zum Wiedereinleiten mindestens eines Teils der Kondensate (C) in den dem Trockner (SE) zugeführten Wasserdampf umfasst.

11. Apparatur nach Anspruch 5, die zum Trocknen eines von Vinylchlorid abgeleiteten feuchten Polymers verwendet wird.

## Revendications

1. Procédé de séchage d'un polymère dérivé du chlorure de vinyle, dont la synthèse inclut au moins une étape effectuée en milieu aqueux et étant à l'état de particules solides dont la teneur en eau est égale ou inférieure à 50 % en poids de polymère, comprenant une étape de séchage effectuée dans un sécheur à lit fluidisé contenant au moins un élément chauffant à l'intérieur duquel circule un fluide calorifère, ledit fluide calorifère étant de la vapeur d'eau à une pression absolue qui est égale ou inférieure à 4 bar.

2. Procédé selon la revendication 1, **caractérisé en ce que** le fluide calorifère est de la vapeur d'eau à une pression absolue inférieure à 1 bar.

3. Procédé selon la renvendication 1 ou 2, **caractérisé en ce que** la vapeur d'eau est de la vapeur d'eau saturée.

4. Procédé selon l'une quelconque des revendications 1 à 3, **caractérisé en ce que** le fluide calorifère est de la vapeur d'eau générée par désurchauffe et s'il y a lieu, détente de vapeur d'eau provenant d'une unité de fabrication de chlorure de vinyle à partir duquel est synthétisé le polymère.

5. Appareillage comprenant au moins :
- un sécheur à lit fluidisé (SE) équipé d'au moins un élément chauffant alimenté par de la vapeur d'eau (V) à une pression absolue qui est égale ou inférieure à 4 bar;
- un séparateur (SP) destiné à séparer les gaz (G) des condensats (C) de la vapeur (V) sortant du sécheur (SE) ;
- un éjecteur (E1) destiné à aspirer les condensats (C) provenant de la condensation de la vapeur (V) en aval du sécheur (SE);
- un réservoir (R) destiné à recueillir les condensats (C) provenant de l'éjecteur (E1).

6. Appareillage selon la revendication 5, comprenant en outre un second éjecteur (E2) destiné à aspirer les gaz (G) provenant du séparateur (SP).

7. Appareillage selon la revendication 5, **caractérisé en ce que** le séparateur (SP) est un condenseur à mélange.

8. Appareillage selon la revendication 5, **caractérisé en ce que** le séparateur (SP) est un déphlegmateur.

9. Appareillage selon la revendication 6, **caractérisé en ce que** le fluide moteur de l'éjecteur (E2) est constitué d'une proportion prépondérante du fluide comprenant les condensats (C) recyclés en navette en aval du réservoir (R).

10. Appareillage selon la revendication 5, **caractérisé en ce qu'**il comprend en outre des moyens pour réinjecter au moins une partie des condensats (C) dans la vapeur d'eau alimentant le sécheur (SE).

11. Appareillage selon la revendication 5, utilisé pour le séchage d'un polymère humide dérivé du chlorure de vinyle.
